# EUROPEAN PATENT APPLICATION

(11) **EP 4 813 657 A1**
(43) Date of publication of application: **30.09.2026**
(21) Application number: 25166608.7
(22) Date of filing: 27.03.2025
(51) Int. Cl.: B41J 3/407, B41J 3/62, B41J 11/00, G06F 3/12, G06F 3/14

(54) **A PRINTER AND A METHOD FOR QUEUEING PRINT JOBS TO BE PRINTED ON RIGID PRINT MEDIA**

(71) Applicant: CANON KABUSHIKI KAISHA, Tokyo 146-8501 (JP)
(72) Inventor: VAN VLIEMBERGEN, Eduardus J.W., Venlo (NL); VERHAAG, Franciscus J.J., Venlo (NL); GERRITS, Antonius M., Venlo (NL); KROES, Arjan, Venlo (NL); DE JONG, Frederik, Venlo (NL); ROELFS, Harmannus B., Venlo (NL)
(74) Representative: Canon Production Printing IP Department

(57) **Abstract**

A multi-lane printer for printing rigids and a method therefor. The print controller of the multi-lane printer comprises a first print queue comprises a first group of print jobs to be printed on print media which is intended to be left aligned in a lane, a second print queue comprises a second group of print jobs to be printed on print media which is intended to be right aligned in a lane, and a single print queue comprising both the first and the second group of print jobs. The single print queue is shown on the user interface in a single queue view. The first and second queue together are shown in a dual queue view on the use interface screen. The method provides rules for ordering the print jobs when switching between the single queue view and the dual queue view.

## Description

### BACKGROUND OF THE INVENTION

### 1. Field of the invention

The present invention relates to a printer comprising a user interface for interaction with a user of the printer, a print controller for controlling the print process for a digital image to be printed and a transport device comprising an endless transport belt supported on a pair of support rollers, which between them define a medium support plane, over which medium support plane a print station is provided, the transport device configured to transport in parallel lanes a plurality of individual print media which are left or right aligned in a lane, perpendicular to a scanning direction of the print station on the medium support plane, wherein the print controller comprises a first print queue comprises a first group of print jobs to be printed on print media which is intended to be left aligned in a lane, a second print queue comprises a second group of print jobs to be printed on print media which is intended to be right aligned in a lane, and a single print queue comprising both the first and the second group of print jobs, wherein each print job in the single print queue has an alignment attribute out of a group of "left aligned", "right aligned" and "undetermined", and wherein each print job in the single print queue having an alignment attribute "left aligned" or "undetermined" also resides in the first print queue, and each print job in the single print queue having an alignment attribute "right aligned" also resides in the second print queue.

The printer may be a printer for printing on large print media like rigids or a large format hybrid printer for printing on large print media like rigids and rolls of print media.

The present invention also relates to a method for dealing with the first print queue, the second print queue and the single print queue.

The media support plane may also be called "table" hereinafter.

A rigid print medium may also be called "rigid", "board" or "rigid board".

The print medium may also be called "print media" or "print media piece".

A guiding bar may also be called an alignment bar.

A left side or a right side of a lane is defined to be the side which is left or right respectively when viewing towards the front side of the printer when feeding the media into the printer.

A don't care alignment is an undetermined alignment, i.e. the alignment may be right or left.

### 2. Description of Background Art

Large format hybrid printers are configured to print both rigid substrates as well as flexible print media. Such a printer may comprise a transport device comprising an endless transport belt supported on at least one pair of support rollers, which between them define a medium support plane. Over the medium support plane a print station is provided. The print station generally comprises a printhead carriage translatable over the belt to print an image on a print medium on the belt in consecutive swaths. The print medium is moved in steps in between passes of the printhead carriage.

A large format hybrid printer is intended to be a productive engine capable of printing both on roll-2-roll media and on rigids. To be productive on rigids the printer is equipped with a multi-lane concept. With this, multiple rigids can be printed in parallel next to each other. The multilane concept increases productivity since there will be less "turn time" for the print station compared to "jetting time" and multiple boards can be processed simultaneously.

The present invention may also be applied to a rigid printer which is only capable of printing on rigids, and not on rolls.

In order to enhance an overall productivity and to reduce operator hassle the printer supports the feature of independent board feeding, i.e. the print medium does not need to be aligned in the transport direction. The print medium has to be placed against one of the guiding bars to achieve a fluent transport in an appropriate lane.

However, a single print queue could be used for multiple lanes. For example, a single print queue could be used for up to 6 lanes. So the user can feed a rigid in each of the available lanes and the printer just prints the next to be printed image from the single print queue. Also known is a possibility to have two print queues. The first print queue is configured for the left aligned lanes and the second print queue is configured for the right aligned lanes.

The print jobs may be shown at the user interface in a single queue view showing only the single print queue, or in a dual queue view which shows the first queue and the second queue next to each other. The order in which the print jobs are printed within a queue is strictly from the top to the bottom, but this also means that it is different depending on displaying the single queue view or the dual queue view.

A possible precondition to switch queue views could be that the queues are empty and/or the printer is not printing. The problem with both preconditions is that an operator would be forced to wait before next planned print jobs can be added in the other queue view. It would also force the printer to not print for some time.

The problem that has to be solved is how to always being able to plan later print jobs in the other queue view without having to wait or stopping the printer and how to switch back to the previous queue view to continue printing. How to deal with switching between the two views when the queue(s) are not empty or contain jobs that are being printed, and to switch in such a way that it corresponds with the expectations of the user.

### SUMMARY OF THE INVENTION

It is an object of the invention to provide a printer with an improved ease of use of the queue views.

In accordance with the present invention, a method for printing according to claim 1 is provided.

Technically the above mentioned problem is solved by only having one queue of print jobs as well as some rules how to deal with the print jobs. However, it is still possible to show two queues.

In the single queue view the jobs in the single print queue are handled from top to bottom. For a print job that is left aligned only the left aligned lanes will be used. For a print job that is right aligned only the right aligned lanes will be used. For a print job for which the alignment isn't important (alignment = don't care) all lanes will be used. The signalling elements in each lane indicate the possible lanes where a user can position the rigid for the next image in the single print queue.

If a print job in the single print queue needs other print media then a media request may be in the single print queue just in front of the print job. As soon as the media request arrives at the top of the single print queue the user has to confirm by means of the user interface that said media is going to be used.

In the dual queue view the jobs in the first print queue only use the left aligned lanes, while the jobs in the second print queue only use the right aligned lanes. So the job attribute in itself is not taken into account in the dual queue view, but it may have caused that a job ends up in a specific queue.

The signalling elements indicate the possible lanes where a user can position the rigid for the next image in both the first queue as well as the second queue.

If a job in one of the queues needs other media then a media request will be added in front of that job. This media request may be a media request for both queues. Print jobs in the other queue that are after the print job with the media request in the physical queue will also be shown below the media request.

Both the single queue view as well as the dual queue view have advantages and therefor also the switching between the two views is useful.

The single queue view is the most productive way to print on smaller rigids when no specific alignment is requested for the print jobs. Multiple lanes, e.g. up to six lanes, can be used in parallel if the alignment is not important. If alignment matters the user can still use the single queue view since only the lanes will be used (and communicated to be used) for which the alignment corresponds to the job attribute.

The dual queue view is especially useful when there are both left aligned as well as right aligned print jobs that have to be printed. Moving a print job from a waiting room to the first or second queue is an easy way for the operator to indicate which alignment has to be used for said print job. It will also be very useful to print multiple copies of a double sided application, enabling to print front sides and back sides at the same time.

According to an embodiment the method comprises the steps of the user interface displaying the single queue view of print jobs, print controller receiving a user request via the user interface to switch from the single queue view to the dual queue view, and the print controller instructing the user interface to display the dual queue view instead of the single queue view, or the user interface displaying the dual queue view of print jobs, print controller receiving a user request via the user interface to switch from the dual queue view to the single queue view, and the print controller instructing the user interface to display the single queue view in stead of the dual queue view.

According to an embodiment the method comprises the steps of establishing that a print job needs another print media than a previous print job, adding a media request in the dual queue view and the single queue view before the print job.

According to an embodiment the method comprises switching between the dual queue view and the single queue view according to at least one rule out of a set of rules comprising a first rule that print jobs that have already have been started printing, continue printing with the allowed lanes how the print jobs started, a second rule that for the print jobs in the dual queue view it is stored in memory if the print jobs are in the first print queue or in the second print queue when switched to the single queue view, a third rule that print jobs are allowed to be moved to the first or second print queue but do not lose an original media feed alignment attribute of the print jobs when the user switches from the single queue view to the dual queue view, a fourth rule that print jobs that have already been started remain at the top of the first print queue, the second print queue or the single print queue, a fifth rule that print jobs are only allowed to print in parallel or to be reordered locally between media changes, and a sixth rule that print jobs with alignment "undetermined" end up in the first print queue when switching to the dual queue view.

The first rule allows to (temporarily) switch to the other queue view without affecting the currently printing jobs.

The second rule allows to temporarily switch to one queue view and go back to the other queue view without affecting the not yet printing jobs. This is allowed even if in the dual queue view print jobs were being moved from one queue to the other queue. This queue association is 'remembered' until a print job is moved back to the waiting jobs in a waiting room of print jobs being part of memory of the print controller of the printer.

The third rule allows to switch to the dual queue view and back to the single queue view without having to modify such a moved print job, especially "don't care" print jobs, when printing in either queue.

The fourth rule allows, when switching from the dual queue view to a single queue view and two print jobs were printing in parallel, that both printing jobs will be at the top of the single print queue, even if one of the printing jobs was originally further down in the single print queue.

According to the fifth rule switching queue views is no implicit print job sort-on-media action. The fifth rule balances clarity for the user versus minimizing the amount of media changes.

The sixth rule allows to keep a "don't care" print job as one print job for the user. Additionally the print job may be divided over the two queues and be merged again when going to the single queue view.

Using at least one rule out of the set of rules, i.e. the first rule until the sixth rule, delivers a number of advantages when switching between the single queue view and the dual queue view as will be summarized hereinbelow.

A first advantage is that there is no need to wait or stop the printer. It is always possible to plan future print jobs, even for a different queue view needed in the near future. Switching from one queue view to the other and back results in the same situation as long as no new print jobs are started.

A second advantage is that print jobs that are currently being printed can continue without change.

A third advantage is that print jobs that are currently being printed are always at the top of the queue(s). There is no need to search in the single queue view for print jobs that were printing in parallel in the dual queue view.

A fourth advantage is that the media requests remain as they are. Print jobs do not jump over a media request. The stacks of media that are prepared to be printed are not affected by the queue view.

The present invention also relates to a software product comprising program code on a machine-readable medium, which program code, when loaded into a print controller of a digital printer according to the present invention, causes the print controller to execute the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the scope of the present invention will become apparent to those skilled in the art from this detailed description.
Fig. 1 is a schematic perspective view of a printing system configured to print on rigids according to the present invention;
Fig. 2 is a schematic perspective view of a hybrid printing system configured to print on rolls according to the present invention;
Fig. 3 is a schematic diagram of a control unit of a printer according to Fig. 1;
Fig. 4 is a schematic view of the media support plane of the printer according to Fig. 1;
Fig. 5A - 5B are schematic diagrams of user interface windows according to the present invention;
Fig. 6A - 6E are examples of switching from one queue view to another according to the rules of the method according to the present invention;
Fig. 7 is a flow diagram illustrating two embodiments of a method according to the present invention; and
Fig. 8 is a diagram of a software product according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

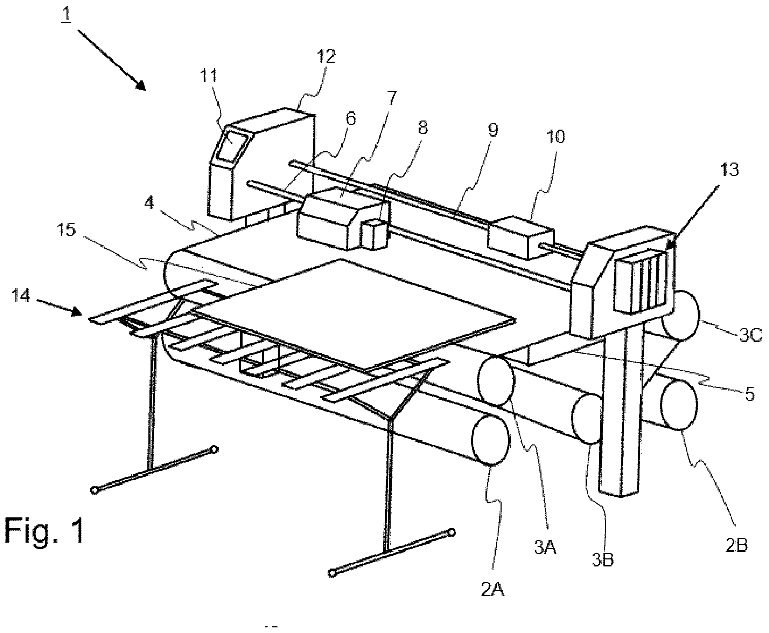

Fig. 1 shows a wide format inkjet printer 1. The wide-format printer 1 comprises an inkjet printing assembly 7 for printing on a print medium 15. The print medium 15 in Fig. 1 is a relatively rigid substrate, such as a panel. The print medium 15 is supplied from a media input unit 14, which may be configured for storing a plurality of such print media 15 and supplying these to the printer 1. The printer 1 comprises transport means for receiving and transporting the print medium 15 along the inkjet printing assembly 7. In Fig. 1, the transport means comprise an endless transport belt 4 supported on a plurality of support rollers 3A, 3B, 3C. At least one of the support rollers 3A, 3B, 3C is provided with driving means for moving the belt 4. Additionally, one or more one of the support rollers 3A, 3B, 3C may be configured to be moved and/or tilted to adjust and control the lateral position of the belt 4. The printer 1 is provided with at least one sensor or detector, such as a CCD camera or area camera, to determine the relative position of belt 4 and/or the print medium 15. Data from said at least one sensor or detector may be applied to control the position of the belt 4 and/or the print medium 15. The at least one sensor or detector is positioned in or at a housing (not shown) of the printer 1 and is configured to detect the print medium 15 before transporting the print medium 15 or before the print medium reaches the print station 7. By using cameras the print medium 15 can be detected over a full width of the medium support plane, and before the print station 7 will start printing on the print medium 15. The at least one sensor or detector can also sense or see alignment bars (not shown) positioned on the media input unit 14 extending towards the medium support plane. According to an alternative embodiment the at least one sensor or detector is integrated in the medium support plane.

The belt 4 is further provided with through-holes and a suction box 5 in connection with a suction source (not shown), such that a negative pressure may be applied to the print medium 15 via the through-holes in the belt 4. The negative pressure adheres the print medium 15 flatly to the belt 4 and prevents displacement of the print medium 15 with respect to the belt 4. Due to this holding the belt 4 is able to transport the print medium 15. It will be appreciated that other suitable transport means, such as rollers, steppers, etc., may alternatively be applied. The print medium 15 may be transported stepwise and/or in continuous movement.

The inkjet printing assembly 7 is configured to translate along a first guide beam 6 in a scanning direction. The scanning direction is perpendicular to the direction in which the print medium is transported by the belt 4. The inkjet printing assembly 7 holds a plurality of print heads (not shown), which are configured to jet a plurality of different marking materials (different colours of ink, primers, coatings, etc.) on the print medium 15. Each marking material for use in the printing assembly 7 is stored in one of a plurality of containers arranged in fluid connection with the respective print heads for supplying marking material to said print heads to print an image on the print medium 15.

The ejection of the marking material from the print heads is performed in accordance with data provided in the respective print job. The timing by which the droplets of marking material are released from the print heads determines their position on the print medium 15. The timing may be adjusted based on the position of the inkjet printing assembly 7 along the first guide beam 6. The above mentioned sensor 8 may therein be applied to determine the relative position and/or velocity of the inkjet printing assembly 7 with respect to the print medium 15. Based upon data from the sensor 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the print medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit 10 is provided downstream of the inkjet printing assembly 7. The fixation unit 10 may emit heat and/or radiation to facilitate the marking material fixation process. In the example of Fig. 1, the fixation unit 10 is a radiation emitter, which emits light of certain frequencies, which interacts with the marking materials, for example UV light in case of UV-curable inks. The fixation unit 10 in Fig. 1 is translatable along a second guide beam 9. Other fixation units 10, such as page-wide curing or drying stations may also be applied. Further, the inkjet printing assembly 7 may be provided with a further fixation unit on the same carriage which holds the print heads. This further fixation unit can be used to (partially) cure and/or harden the marking materials, independent of or interaction with the fixation unit 10.

After printing, and optionally fixation, the print medium 15 is transported to a receiving unit (not shown). The receiving unit may comprise a take-up roller for winding up the print medium 15, a receiving tray for supporting sheets of print medium 15, or a rigid media handler, similar to the media input unit 14. Optionally, the receiving unit may comprise processing means for processing the medium 15 after printing, e.g. a posttreatment device such as a coater, a folder, a cutter, or a puncher.

The wide-format printer 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The control unit 12 is also to an embedded controller (not shown) which receives signals from sensors in the printer 1 and issues signals to the electronic components of the printer 1, for example electronics due to the plurality of lanes of the printer 1. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Hybrid printing system

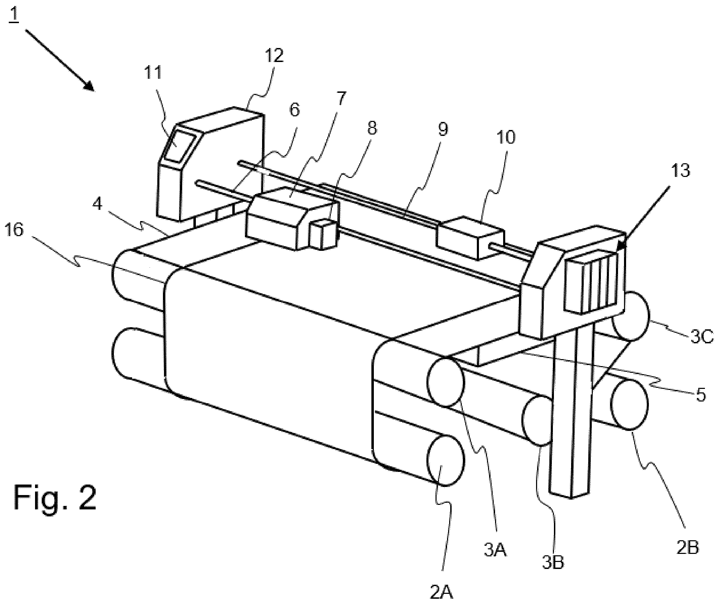

The printer 1 in Fig. 1 is a so-called hybrid printer, capable of handling both flexible media and rigid substrates. In Fig. 1, the printer 1 operates in a first print situation, wherein the printer 1 is configured for transporting rigid substrates, such as the print medium 15. Such rigid print media 15 may be panels for doors, walls, etc., corrugated media, plates formed of plastic or metal, etc. To handle these rigid print media 15, the printer 1 in Fig. 1 is configured with a substantially linear transport path: from the media input device 14, the print medium 15 moves forward along the inkjet printing assembly 7 at a at substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

### Control

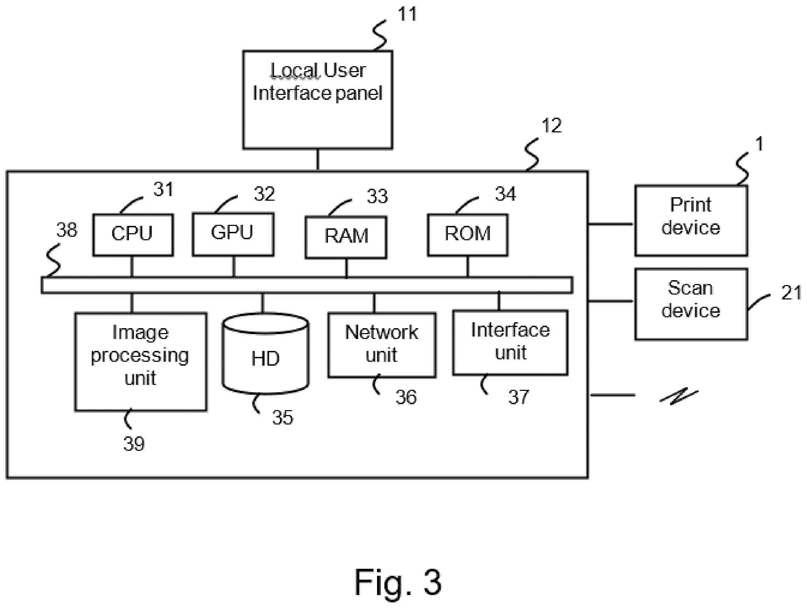

An embodiment of the control unit 12 is in more detail presented in Fig. 3. As shown in Fig. 3, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client device 21 and to the printing system 1. The network unit 36 connects the control unit 12 to the network N and is designed to provide communication with workstations and with other devices reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings. The control unit 12 si connected to an embedded controller for receiving signals from sensors in the printer 1 and issuing signals to the plurality of components of the printer 1.

### Multi-lanes concept

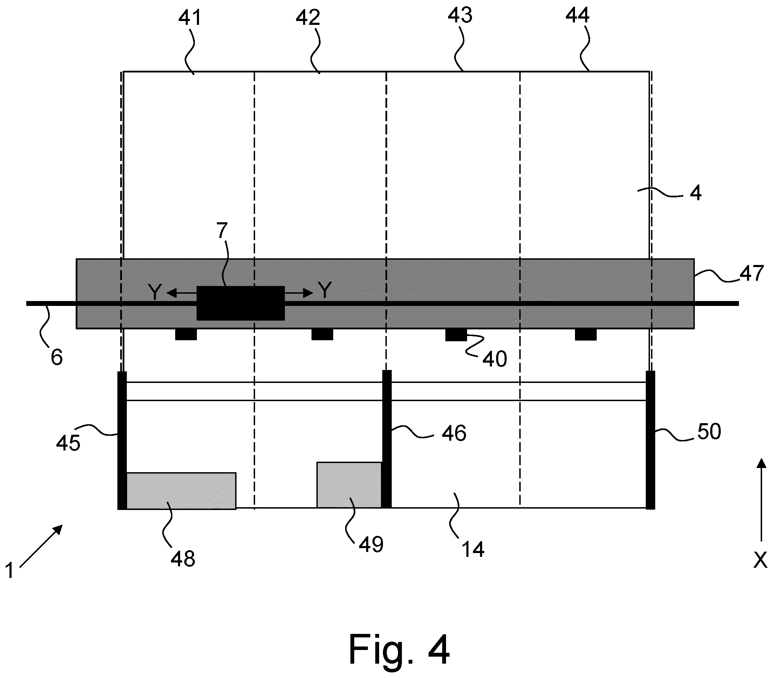

Fig. 4 shows schematically the printer 1 seen from above provided with a multi-lane concept. The belt 4 is divided into lanes 41, 42, 43, 44 which are parallel in the transport direction X of the print media on the media input unit 14 and the belt 4. In parallel a plurality of individual print media may be transported perpendicular to a scanning direction Y of the print station 7 of the printer 1. The print media may have different dimensions. Positions of each individual print medium is determined. A designated image specific for each print medium is jetted on each respective print medium. The above steps are repeated such that print media are printed in parallel lanes 41, 42, 43, 44 perpendicular to the scanning direction Y.

In this example, four lanes 41, 42, 43, 44 are depicted. However, according to the invention the number of lanes may be in principle two or more lanes. A number of preferred configurations will be described hereinafter.

The position and the widths of the lanes 41, 42, 43, 44 on the belt 4 and the media input unit 14 are configurable via the user interface 11. Such a configuration is determined by the positions of one or more guiding bars 45, 46, 50.

The lanes 41, 42, 43, 44 are completely or partially bound by guiding bars 45, 46, 50 extending on the media input unit 14 towards the belt 4 in the transport direction X of the belt 4.

The print media may be aligned by means of the guiding bars 45, 46, 50. A print media piece may be left aligned or right aligned. For example print media piece 48 is left aligned along guiding bar 45 and print media piece 49 is right aligned along guiding bar 46. The print media may have different sizes, i.e. different lengths and/or widths.

A housing 47 above the belt 4 comprises a guiding rail 6 via which the print station 7 is able to travel in the scanning direction Y. The housing 47 also comprises one or more sensors (not shown) which are substantially downward directed to the belt 4 for detecting a presence and a position of print media in the lanes 41 - 44. The housing 47 also comprises signalling objects 40 at the front side directed to the media input unit 14 for signalling if a lane is disabled or enabled or if a lane is available to receive print media to print the images of the current print job. A signalling object 40 is positioned above each of the defined lanes 41 - 44.

The planning of feeding of a print medium in the printer may be directly derived from the print job order sequence in the single print queue of the printer 1, where each print job indicates sizes of the at least one image to be printed on the print media. The print controller 12 keeps track of the completed images, the currently being printed images and the images to be scheduled for printing.

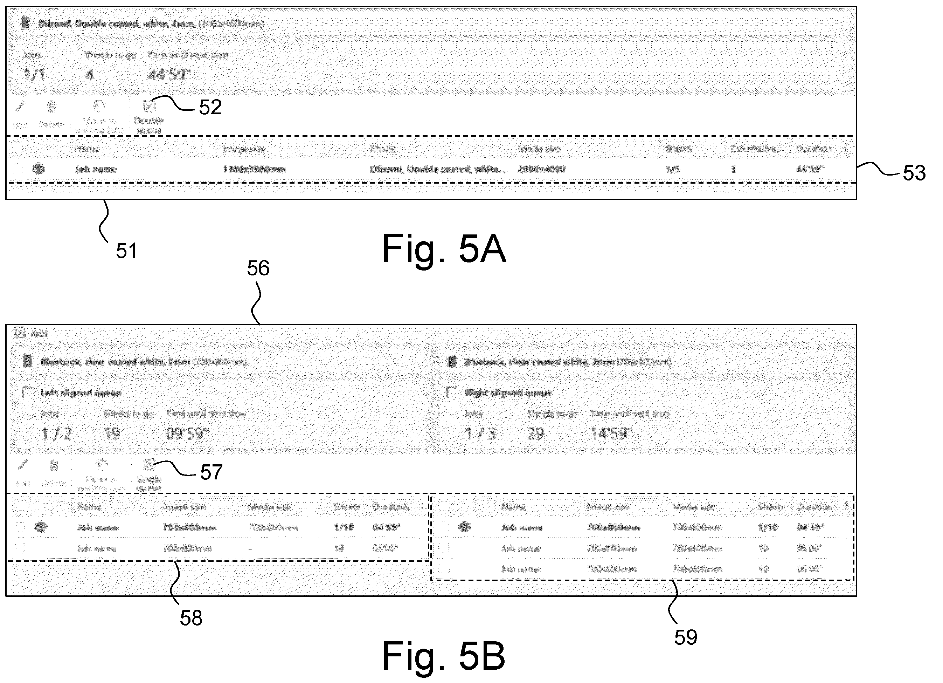

Fig. 5A shows a schematic user interface window 51 according to the present invention. In the schematic user interface window 51 a representation of the single print queue 53 is shown. In this example the single print queue 53 contains only one print job. The schematic user interface window 51 is actually the single queue view according to the present invention. An image in a waiting room (not shown) may be selected and, moved or copied to the single print queue 53. A switch button 52 is provided to switch from the single queue view 51 to the dual queue view 56 shown in Fig. 5B.

Fig. 5B shows a schematic user interface window 56 according to the present invention. The schematic user interface window 56 displays a representation of the first print queue 58 and a representation of the second print queue 59. The first print queue 58 contains 2 print jobs to be processed. The second print queue 59 contains 3 print jobs to be processed. The print jobs at the top of both print queues 58, 59 are currently being printed. The schematic user interface window 56 is actually the dual queue view according to the present invention. The first print queue 58 comprises images to be printed on left aligned print media. The second print queue 59 comprises images to be printed on right aligned print media. An image in a waiting room (not shown) may be selected and, moved or copied to the first print queue 58 or the second print queue 59. A switch button 57 is provided to switch from the dual queue view 56 to the single queue view 51 shown in Fig. 5A.

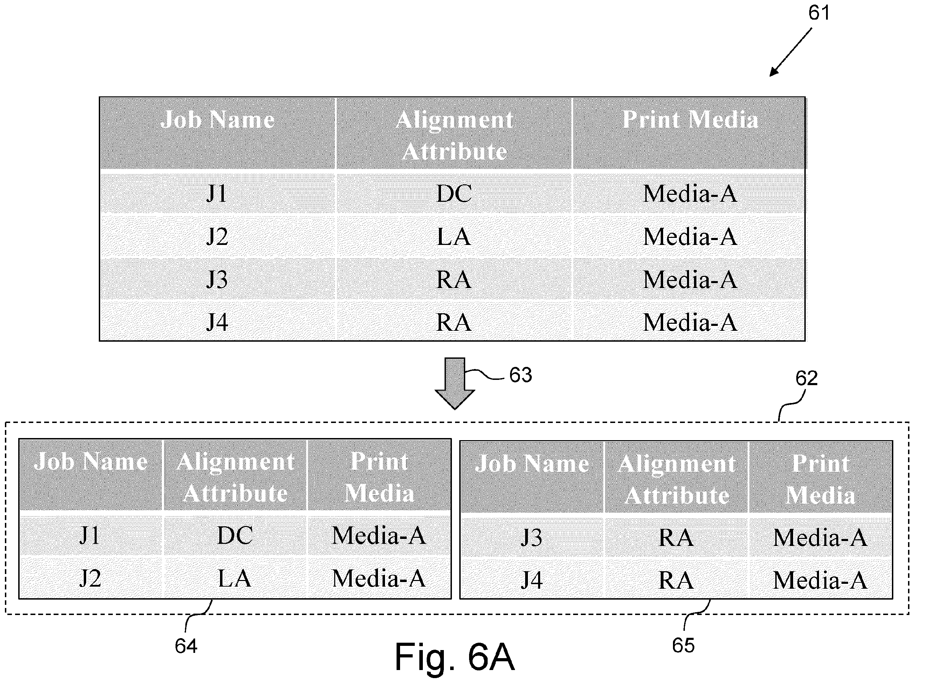

Fig. 6A - 6E show examples of switching from the single queue view to the dual queue view according to the rules of the method according to the present invention. Fig. 6A shows a first example. Fig. 6A shows the single queue view 61 containing 4 print jobs J1, J2, J3 and J4. Print job J1 has the alignment attribute DC ("don't care") and will be printed on print media A. Print job J2 has the alignment attribute LA ("left aligned") and will be printed on print media A. Print job J3 has the alignment attribute RA ("right aligned") and will be printed on print media A. Print job J4 has the alignment attribute RA ("right aligned") and will be printed on print media A.

When 63 switching to the dual queue view 62 the print jobs J1, J2 will be present in the first print queue 64 in a same order as in the single queue view 61. The print jobs J3, J4 will be present in the second print queue 65 in a same order as in the single queue view 61. The alignment attributes of the print jobs J1 - J4 will not change during the switch 63 according to the third rule of the present invention. Print job J1 is moved to the first print queue 64 in the dual queue view 62 because of the sixth rule of the present invention.

If print job J1 is moved to the second print queue 65 then the print job J1 will keep the original feed alignment setting. However, because the print job J1 is then in the dual queue view 62 in a queue the print job J1 will always obey the alignment of said queue. The alignment attribute is not remembered when a print job is moved to the Waiting Room (not shown).

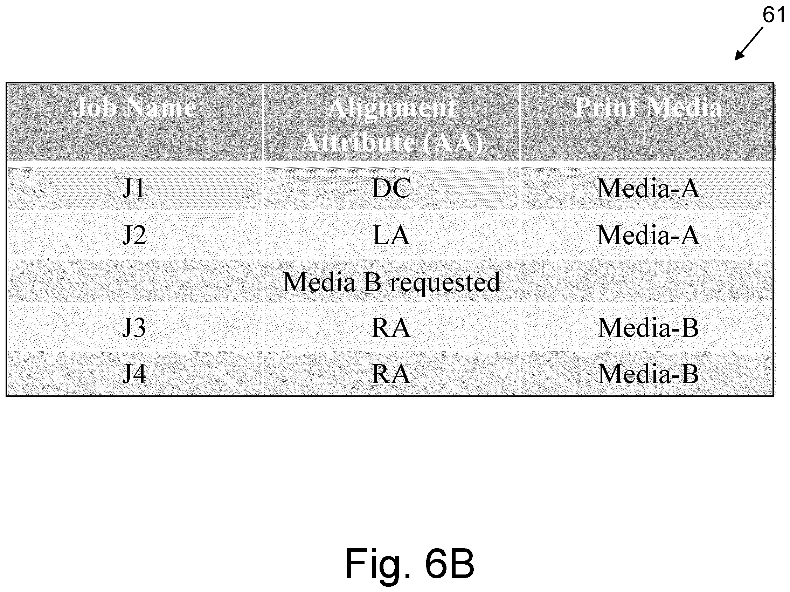

Figs. 6B-6C show a second example. The second example resembles the first example in Fig. 6A but now there is a media request between the print job J2 and print job J3. Fig. 6B shows the single queue view 61 again. The print jobs J3 and J4 are now requesting print media Media-B.

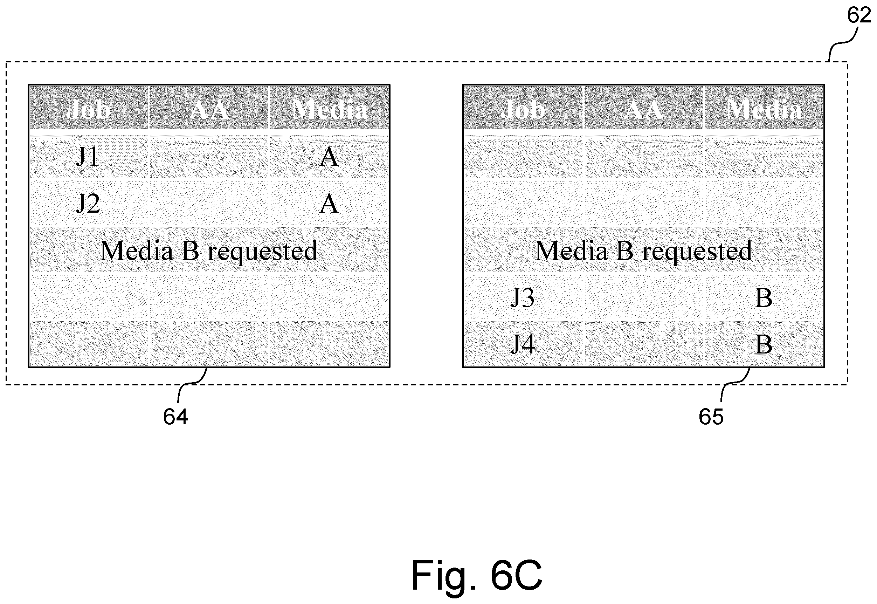

When switching to the dual queue view 62 the content of the first queue 64 and the second queue 65 will be as shown in Fig. 6C. According to the fifth rule of the present invention print jobs are only allowed to print in parallel or to be reordered locally between media changes.

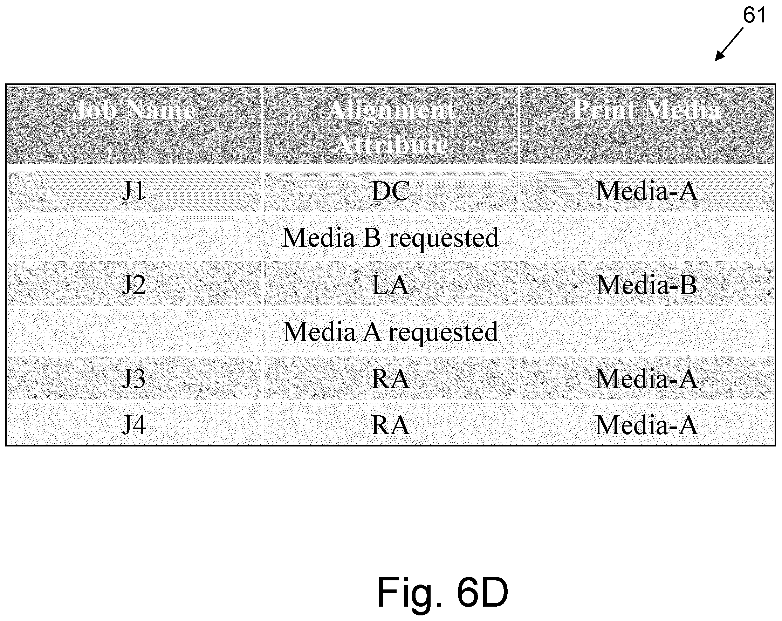

Figs. 6D-6E show a third example. Now there are two media requests. Fig. 6D shows the single queue view 61 for the third example. A first media request for media B is between print job J1 and print job J2. A second media request for media A is between print job J2 and print job J3.

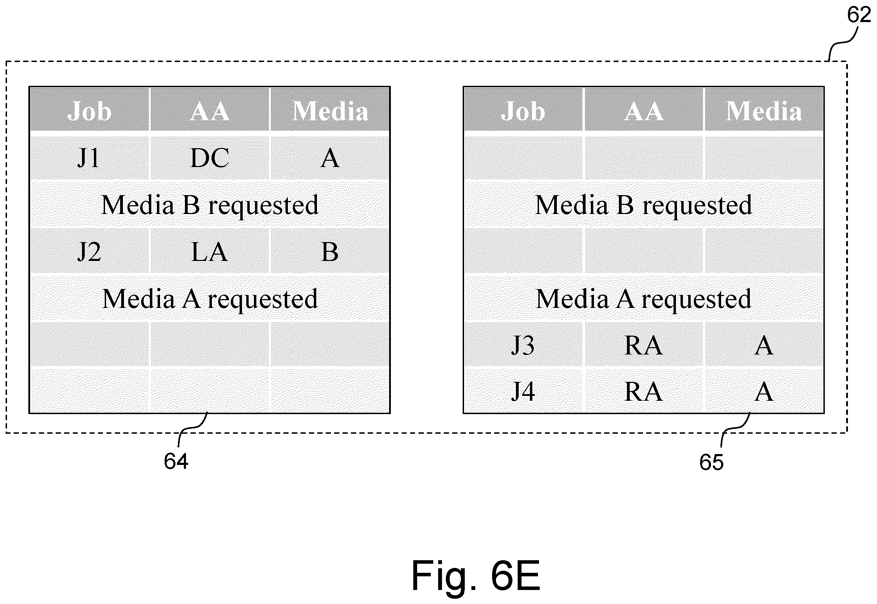

When switching to the dual queue view 62 the first queue 64 and the second queue 65 in the dual queue view 62 will look like as is shown in Fig. 6E.

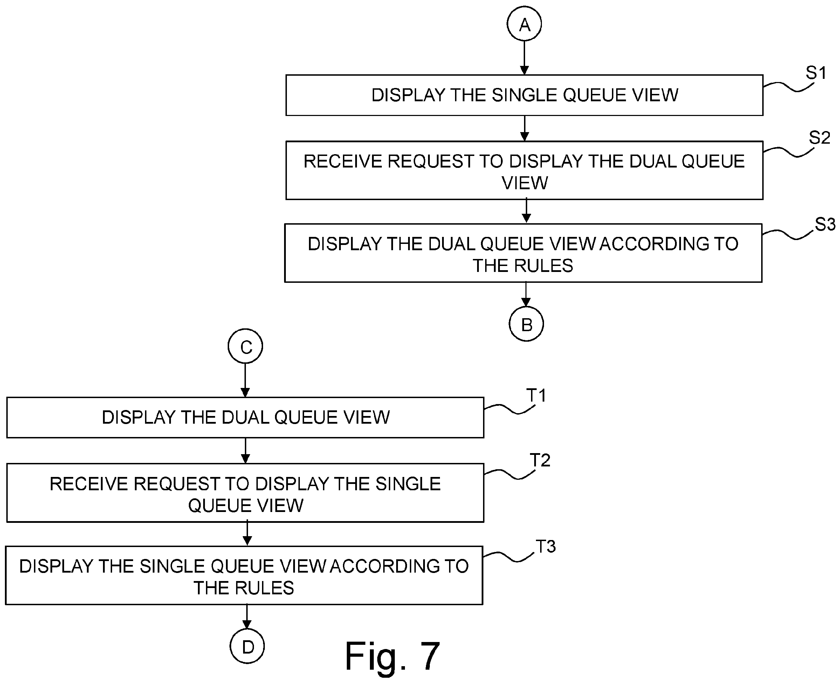

Fig. 7 describes examples of two embodiments of a method according to the present invention.

The first method starts in a starting point A which leads to a first step S1.

In the first step S1 the user interface is displaying the single queue view.

In a second step S2 the print controller receives a request to display the dual queue view. The request may be received via the user button 52 shown in Fig. 5A. The print controller constructs which print jobs are going to end up in the first queue of the dual queue view and which print jobs are going to end up in the second queue view. The construction is done according to at least one rule out of the rules of the present invention. The print controller sends the data for the first and second queue view to the user interface screen.

In a third step S3 the user interface displays the dual queue view according to the at least one rule out of the set of rules of the present invention.

The method ends in an end point B.

The second method starts in a starting point C which leads to a first step T1.

In the first step T1 the user interface is displaying the dual queue view.

In a second step T2 the print controller receives a request to display the single queue view. The request may be received via the user button 57 shown in Fig. 5B. The print controller constructs the single print queue by merging the print jobs in first queue and the print jobs in the second queue into the single queue. In fact the merging activity may be minimalized or even not needed since the single print queue is always present and the single print queue can be updated immediately after or simultaneously with a change in the dual queue view with respect to the first print queue and/or the second print queue. Alignment takes place on the media request(s). The print controller keeps track that a moved print job is placed after another print job which determines the new position in the single queue view. In another embodiment the print jobs in the second print queue (Right Aligned) of the dual queue view are placed after the print jobs in the first print queue (Left Aligned or Don't Care) of the dual queue view in the single queue view. The construction is done according to the at least one rule out of the rules of the present invention, specifically the second rule, the fourth rule and the fifth rule according to the present invention. The print controller sends the data for the single queue view to the user interface screen.

In a third step T3 the user interface displays the single queue view according to the at least one rule out of the rules of the present invention.

The method ends in an end point D.

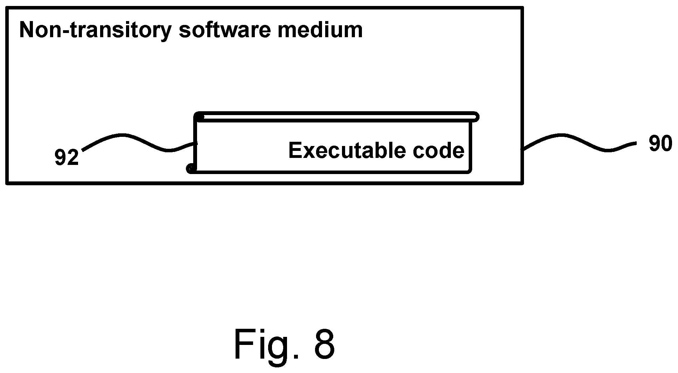

Fig. 8 schematically shows a non-transitory software medium 90 according to the invention. The software medium 90 comprises executable code 92 configured to, when executed, perform the method according to the invention, e.g. as described with respect to either the printing system 1 shown in Fig. 1 or the method of controlling the printing system 1 according to the present invention and/or according to any of the variants and modifications of the printing system 1 and/or of the method described herein.

The non-transitory software medium 90 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A printer (1) comprising a user interface for interaction with a user of the printer (1), a print controller (12) for controlling the print process for a digital image to be printed and a transport device comprising an endless transport belt (4, 104) supported on a pair of support rollers (3A, 3B, 3C), which between them define a medium support plane, over which medium support plane a print station (7) is provided, the transport device configured to transport in parallel lanes a plurality of individual print media which are left or right aligned in a lane, perpendicular to a scanning direction of the print station (7) on the medium support plane,
wherein the print controller (12) comprises a first print queue comprises a first group of print jobs to be printed on print media which is intended to be left aligned in a lane, a second print queue comprises a second group of print jobs to be printed on print media which is intended to be right aligned in a lane, and a single print queue comprising both the first and the second group of print jobs,
wherein each print job in the single print queue has an alignment attribute out of a group of "left aligned", "right aligned" and "undetermined",
wherein each print job in the single print queue having an alignment attribute "left aligned" or "undetermined" also resides in the first print queue, and each print job in the single print queue having an alignment attribute "right aligned" also resides in the second print queue,
wherein the print controller is configured to keep the single print queue consistent with the first and second print queue and the other way around upon changes in the respective print queues, and
wherein the user interface is configured to display a single queue view of the single print queue and to display a dual queue view of the first and second print queue, wherein the print controller is configured to enable switching from the single queue view to the dual queue view and vice versa upon a user request via the user interface.

2. A method for displaying a single queue view and a dual queue view on a user interface of a printer according to claim 1, wherein the method comprises the steps of
the user interface displaying the single queue view of print jobs, print controller receiving a user request via the user interface to switch from the single queue view to the dual queue view, and the print controller instructing the user interface to display the dual queue view instead of the single queue view, or
the user interface displaying the dual queue view of print jobs, print controller receiving a user request via the user interface to switch from the dual queue view to the single queue view, and the print controller instructing the user interface to display the single queue view in stead of the dual queue view.

3. A method according to claim 2, wherein the method comprises the steps of establishing that a print job needs another print media than a previous print job, adding a media request in the dual queue view and the single queue view before the print job.

4. A method according to any of claims 2 - 3, wherein the method comprises switching between the dual queue view and the single queue view according to at least one rule out of a set of rules comprising a first rule that print jobs that have already have been started printing, continue printing with the allowed lanes how the print jobs started, a second rule that for the print jobs in the dual queue view it is stored in memory if the print jobs are in the first print queue or in the second print queue when switched to the single queue view, a third rule that print jobs are allowed to be moved to the first or second print queue but do not lose an original media feed alignment attribute of the print jobs when the user switches from the single queue view to the dual queue view, a fourth rule that print jobs that have already been started remain at the top of the first print queue, the second print queue or the single print queue, a fifth rule that print jobs are only allowed to print in parallel or to be reordered locally between media changes, and a sixth rule that print jobs with alignment "undetermined" end up in the first print queue when switching to the dual queue view.

5. A software product comprising program code on a machine-readable medium, which program code, when loaded into a print controller (12) of a digital printer according claim 1, causes the print controller (12) to execute the steps of the method according to any of the claims 2 - 4.
